**Europäisches Patentamt**

**European Patent Office**

**Office européen des brevets**

(19)

(11) Veröffentlichungsnummer : **0 369 946 B1**

(12) # EUROPÄISCHE PATENTSCHRIFT

(45) Veröffentlichungstag der Patentschrift :
**07.04.93 Patentblatt 93/14**

(51) Int. Cl.$^5$ : **C02F 11/00, C04B 18/02, C04B 40/00**

(21) Anmeldenummer : **89810862.6**

(22) Anmeldetag : **09.11.89**

(54) **Verfahren zur Immobilisierung von Abfällen.**

(30) Priorität : **14.11.88 CH 4240/88**

(43) Veröffentlichungstag der Anmeldung :
**23.05.90 Patentblatt 90/21**

(45) Bekanntmachung des Hinweises auf die
Patenterteilung :
**07.04.93 Patentblatt 93/14**

(84) Benannte Vertragsstaaten :
**AT BE DE FR GB IT NL**

(56) Entgegenhaltungen :
**EP-A- 0 139 791**
**FR-A- 2 545 387**
**GB-A- 2 202 525**

(73) Patentinhaber : **FAIRTEC AG**
**Landstrasse 2**
**CH-5300 Turgi (CH)**

(72) Erfinder : **Altermatt, Rolf**
**Wolfigstrasse 18**
**CH-5223 Riniken (CH)**
Erfinder : **Daester, Henri**
**Hübelistrasse 20**
**CH-3652 Hilterfingen (CH)**

(74) Vertreter : **Becher, Pauline, Dr. et al**
**A. Braun, Braun, Héritier, Eschmann AG**
**Holbeinstrasse 36-38**
**CH-4051 Basel (CH)**

## Beschreibung

Die Verfestigung (Immobilisierung) von Flugaschen (Filteraschen) und Rückständen aus der Rauchgasreinigung ist wegen ihres Schwermetallgehaltes, der hauptsächlich aus Blei, Zink, Cadmium und Quecksilber besteht, erforderlich. Die Schwermetalle werden aus nicht verfestigten Flugaschen und nicht verfestigten Rückständen aus der Rauchgasreinigung durch Regenwasser ausgespült. Bei der Verarbeitung von Säuren und Laugen, die Metallsalze enthalten, entstehen Metallhydroxidschlämme, aus denen das Regenwasser die Metalle herauslöst, wenn sie ohne Verfestigung auf Deponien gelagert werden.

Die Verfestigung erfolgt in der Regel durch Mischen mit Zusätzen, wie Zement, Kalk usw., die zu Festprodukten abbinden. Im allgemeinen werden die Bestandteile nass gemischt, worauf man sie aushärten lässt. Es vergeht aber viel Zeit, bis auf diese Weise Festkörper erhalten werden. Man ist z.B. so vorgegangen, dass man die flüssige oder pastenförmige Mischung in der Deponie aushärten liess.

Es wurde nun gefunden, dass die Verfestigung in kurzer Zeit (maximal in ca. 2 Stunden) erfolgt, wenn nur soviel Wasser vorhanden ist, wie die Mischung zu binden vermag. Infolgedessen ist die Mischung quasi trocken, und es treten keine Schwierigkeiten infolge der Diffusion von wasserlöslichen Bestandteilen durch die Mischung auf.

Das erfindungsgemässe Verfahren zur Herstellung eines festen, transportfähigen Granulats, aus dem die Schwermetalle durch saure wässrige Lösungen praktisch nicht ausgelaugt werden, aus schwermetallhaltigen Abfällen ist somit dadurch gekenzzeichnet, dass man

a) eine Mischung von mindestens zwei Komponenten herstellt, die mindestens eine Komponente, die aus Flugasche, Rückständen aus der Rauchgasreinigung und Schwermetallhydroxidschlamm gewählt ist, sowie gegebenenfalls eine oder mehr weitere Komponenten, die aus Bindemitteln, Puffersubstanzen, Calciumhydroxid, wässrigen Abfall-Lösungen, die in schwach alkalischem Milieu stabile Schwermetallkomplexe enthalten, und Zement gewählt sind, enthält, und die Mischung in einem Intensivmischer 5 bis 15 Minuten lang mischt und

b) der Mischung danach Zement und gegebenenfalls eine oder mehr weitere Komponenten, die aus Bindemitteln, Puffersubstanzen, Beschleunigern und Calciumhydroxid gewählt sind, zusetzt und nochmals 20 bis 105 Minuten lang in dem Intensivmischer mischt,

wobei nur soviel Wasser vorhanden ist, wie die Mischung zu binden vermag, und wobei die Mischung sich durch die Reaktionswärme und die mechanische Einwirkung erwärmt und zunächst eine plastische Masse entsteht, die dann während des Mischens in das feste, transportfähige Granulat übergeht.

Für die Verfestigung von Flugasche und/oder Rückständen aus der Rauchgasreinigung und/oder Schwermetallhydroxidmischungen eignen sich vor allem schnellabbindende Zemente, wie Lafargezement und das Markenprodukt Vicat Ciment Prompt, und auch Portlandzement, doch ist auch die Verwendung anderer Zementsorten möglich. Es hängt von der Zusammensetzung der zu immobilisierenden Abfallstoffe ab, welche Zementsorte geeignet ist. Es kann auch sowohl in der Stufe a) als auch in der Stufe b) Zement zugemischt werden.

Um das Abbinden der Mischung zu beschleunigen, kann der Mischung ein Bindemittel zugesetzt werden. Ein bevorzugtes Bindemittel ist Natronwasserglas; geeignet sind auch organische Chelatbildner, wie Ethylendiamintetraacetat, Nitrilotriacetat, Citrate und Tartrate, oder anorganische Chelatbildner, wie Silicate, Carbonate und Phosphate. Die Bindemittel können in der Stufe a) oder in der Stufe b) zugemischt werden.

Um pH-Schwankungen zu vermeiden, kann man geringe Mengen Puffersubstanzen zusetzen. Als Puffersubstanzen eignen sich z.B. Calciumhydroxid (Kalkhydrat), Phosphatpuffer und Silicatpuffer. Die Puffersubstanzen können ebenfalls in der Stufe a) oder in der Stufe b) zugemischt werden. Die aus dem Granulat ausgelaugte Flüssigkeit soll einen pH-Wert von 8,5 bis 9,5 haben.

Zur Beschleunigung des Abbindens können auch handelsübliche Beschleuniger verwendet werden. Die Beschleuniger können in der Stufe b) zugemischt werden.

Vorzugsweise verwendet man in Kombination mit dem Zement auch Kalkhydrat zur Verfestigung der Abfallstoffe. Es hat sich gezeigt, dass das Kalkhydrat am besten verteilt werden kann, solange die Mischung noch möglichst flüssig ist, doch kann es sowohl in der Stufe a) als auch in der Stufe b) zugemischt werden. Das Kalkhydrat bindet das Wasserglas, falls es verwendet wird, als Calciumsilicat ab und wirkt auch als Puffersubstanz, die verhindert, dass der pH-Wert so weit absinkt, dass Kieselsäure aus dem Wasserglas ausfällt.

Der Wassergehalt der Mischung beträgt in der Regel 10 bis 50 Gew.-%, vorzugsweise 25 Gew.-%. Wenn Schwermetallhydroxidschlämme, die normalerweise 40 bis 70 Gew.-% Wasser enthalten, zugegen sind, stammt mindestens ein grosser Teil des Wassergehaltes aus den Schwermetallhydroxidschlämmen. Auch andere Bestandteile, wie das Wasserglas, tragen zum Wassergehalt bei. Erforderlichenfalls werden 'Jasser und/ oder sogenannte Komplexlösungen zugemischt, um den erforderlichen Wassergehalt der Mischung zu erreichen. Bei den Komplexlösungen handelt es sich um wässrige Abfall-Lösungen aus der Galvanik, die in schwach alkalischem Milieu stabile Schwermetallkomplexe enthalten. Diese Komplexlösungen enthalten als Liganden z.B. Ethylendiamintetraacetat, Zitronensäure, Weinsäure, Borsäure, Phosphite usw. Die Komplexe werden wegen ihres komplizierten räumlichen Aufbaus nicht ausgelaugt.

Die Flugasche und/oder die Rückstände aus der Rauchgasreinigung und/oder der Schwermetallhydroxidschlamm und das Wasser oder die Komplexlösung können in beliebiger Reihenfolge miteinander gemischt werden. Der Zement wird vorzugsweise nach dem Bindemittel zugemischt, während man die Puffersubstanz vor oder nach dem Bindemittel und dem Zement beimischen kann.

Die Mischzeit in Stufe b) beträgt vorzugsweise 20 bis 45 Minuten.

Zweckmässig verwendet man die Mischungskomponenten in den folgenden Mengenverhältnissen:

```
Flugasche und/oder Rückstände aus          0 bis 70 Gew.-%
der Rauchgasreinigung
Schwermetallhydroxidschlamm                0 bis 65 Gew.-%
Zement          .                          1 bis 30 Gew.-%
Wasser oder Schwermetallkomplexlösung      0 bis 30 Gew.-%
Bindemittel                                1 bis 10 Gew.-%
Puffersubstanz                             0 bis 10 Gew.-%
```

wobei der Gesamtwassergehalt 10 bis 50 Gew.-% beträgt.

Beim Mischen der Bestandteile entsteht aus Pulver und Brocken eine lehmähnliche, fast flüssige Masse, die bei weiterem Mischen in ein Granulat übergeht, aber auch in Formen gepresst werden könnte. Die Granulatteilchen haben in der Regel einen durchschnittlichen Durchmesser von 5 bis 30 mm.

Man kann der Mischung bis zu 15 Gew.-%, insbesondere ca. 5 Gew.-%, zerkleinerte Batterien, vor allem quecksilberhaltige Batterien, und/oder zerkleinerte Leuchtstoffröhren und/oder Haushaltrücknahmen beimischen. Unter Haushaltrücknahmen werden z.B. in Kalkmilch aufgelöste bzw. aufgeschlossene Abfallstoffe, wie Ammoniak, Reinigungsmittel und Arzneimittel, verstanden.

In den folgenden Beispielen wurden als "Flugasche" Elektrofilteraschen der Kehrichtverbrennungsanlagen Turgi (Aargau, Schweiz) und Buchs (Aargau, Schweiz) verwendet. Die Analysen von 3 Aschenproben werden im folgenden in g/100 g (Gew.-%) angegeben :

| Bestandteil | Probe | | | Bestimmungs-methode [a] |
|---|---|---|---|---|
| | 1 | 2 | 3 | |
| Natrium | 2,7 | nb [b] | 1,3 | 1 |
| Magnesium | 1,2 | nb | 0,9 | 1 |
| Aluminium | 6,5 | nb | 2,5 | 1 |
| Kalium | 4,4 | nb | 0,5 | 1 |
| Calcium | 10,3 | 14 | 5,1 | 1, 2 |
| Chrom | 0,1 | 0,05 | 0,03 | 1, 2 |
| Mangan | 0,16 | 0,16 | 0,06 | 1, 2 |
| Eisen | 2,5 | 2,9 | 5,5 | 1, 2 |
| Nickel | 0,03 | 0,02 | 0,02 | 1, 2 |
| Kupfer | 0,17 | 0,09 | 0,10 | 1, 2 |
| Zink | 3,6 | 1,1 | 0,08 | 1, 2 |
| Cadmium | 0,04 | 0,01 | 0,002 | 1, 2 |
| Zinn | 0,6 | 0,4 | 0,02 | 1, 2 |
| Barium | 0,2 | 0,2 | 0,06 | 1, 2 |
| Blei | 1,2 | 0,6 | 0,06 | 1, 2 |
| Chlorid (als Cl) | 3,7 | 4,4 | 0,08 | 3 |
| Sulfat (als S) | 4,7 | 2,3 | 0,30 | 4 |
| Carbonat (als C) | 0,16 | 0,29 | 0,12 | 4 |
| Gesamt-Kohlenstoff (als C) | 2,3 | 3,1 | 0,35 | 5 |
| Gesamt-Schwefel (als S) | 4,8 | 2,9 | 0,47 | 5 |

a)    Analytische Bestimmungsmethode:

1 = Plasmaspektrometrie (ICP)

2 = Röntgenfluoreszenz

3 = Potentiometrie

4 = Gravimetrie

5 = Verbrennungsanalyse

b)   nb = nicht bestimmt

Als "Hydroxidschlämme" wurden Filterrückstände aus der Entsorgungsanlage der Firma Fairtec AG in Turgi (Aargau, Schweiz) verwendet, die ausser Schwermetallhydroxiden bzw. -salzen Gips und Apatit enthalten. Ihre Zusammensetzung schwankt stärker als diejenige der Flugaschen, da in den Betrieben, deren Rückstände entsorgt werden, je nach ihrer Spezialisierung verschiedene Schwermetalle verarbeitet werden. Im folgenden wird eine durchschnittliche Analyse der verwendeten Hydroxidschlämme in g/100 g (Gew.-%) ange-

geben :

| | |
|---|---|
| Wasser | 50 |
| Calciumsulfat | 25 |
| Calciumphosphat | 5 |
| Eisenhydroxid | 10 |
| Zinkhydroxid | 4 |
| Nickelhydroxid | 0,5 |
| Kupferhydroxid | 0,5 |
| Chromhydroxid | 0,3 |
| Blei-Cadmium-Aluminium-Magnesium-Salze/Hydroxide | 1 |
| Organische Calciumsalze | 1 |
| Andere | 2,7 |

Als Zement wurde Lafargezement, Vicat Ciment Prompt® oder Portlandzement verwendet. Das Mischen erfolgte in einem Intensivmischer.

Beispiel 1

1 kg Hydroxidschlamm
2 kg Flugasche
175 ml Wasser
100 g Kalkhydrat (Calciumhydroxid)
wurden zusammengegeben und 15 Minuten lang intensiv in einem Intensivmischer durchmischt.
20 ml Beschleuniger E 65 A
100 g Natronwasserglas (35 Gew.-% Natriumsilicat in Wasser)
500 g Lafargezement
wurden zugesetzt und weitere 30 Minuten lang intensiv in dem Intensivmischer durchmischt. Dabei bildete sich ein Granulat mit einem Durchmesser von 4 bis 15 mm. Nach der Reaktionszeit von insgesamt 45 Minuten war das Granulat ohne Nachhärtezeit fest und transportfähig.

Das Granulat enthielt:
Zink      19000 mg/kg
Nickel    1000 mg/kg
Eisen     31000 mg/kg
Kupfer    1000 mg/kg
Chrom     410 mg/kg
Blei      5000 mg/kg
Cadmium   128 mg/kg

Das Granulat wurde in einer 1-millimolaren $HNO_3$-Lösung mit einem pH-Wert von 3 bei Raumtemperatur (25 °C) ausgelaugt. Zu diesem Zweck wurden 100 g des Granulats in 1000 ml der $HNO_3$-Lösung eingetragen. Jeweils nach 0,5, 5 bzw. 50 Stunden sowie nach 21 Tagen (= 504 Stunden) wurde das Eluat durch frische $HNO_3$-Lösung ersetzt und analysiert. Dabei ergaben sich folgende Schwermetallgehalte in mg/Liter bzw. pH-Werte der Eluate:

| Nach | 0,5 Std. | 5 Std. | 50 Std. | 504 Std. |
|---|---|---|---|---|
| pH | 7,0 | 8,7 | 9,1 | 8,8 |
| Zink | 0,1 | 0,1 | 0 | 0,1 |
| Nickel | 0,1 | 0,1 | 0,2 | 0,2 |
| Eisen | 0 | 0 | 0 | 0 |
| Kupfer | 0 | 0 | 0 | 0,1 |
| Chrom | 0 | 0 | 0 | 0,2 |
| Blei | 0 | 0 | 0 | 0,1 |
| Cadmium | 0 | 0 | 0 | 0 |

## Beispiel 2

3000 g    Hydroxidschlamm
200 g    Perlit (Gesteinsmehl, Lieferant : Firma Zimmerli, Badenerstrasse, Zürich, Schweiz)
300 g    Wasserglas (35 Gew.-% Natriumsilicat in Wasser)
800 g    Lafargezement
wurden zusammengegeben und 15 Minuten lang intensiv in einem Intensivmischer gemischt.
400 g    Lafargezement
100 g    Kalkhydrat (Calciumhydroxid)
wurden zugegeben und weitere 35 Minuten lang intensiv in dem Intensivmischer gemischt. Dabei bildete sich ein Granulat, das nach der Reaktionszeit von insgesamt 50 Minuten ohne Nachhärtezeit fest und transportfähig war.

Ein Auslaugetest wurde wie in Beispiel 1 durchgeführt und ergab folgende Werte (Leitfähigkeit in mS bzw. Schwermetallgehalt in ppm) :

| Nach | 0,5 Std. | 5 Std. | 50 Std. |
|---|---|---|---|
| pH | 8,3 | 8,5 | 9,0 |
| Leitfähigkeit | 3,5 | 3,1 | 1,5 |
| Zink | 0,2 | 0,1 | 0,1 |
| Nickel | 0,3 | 0,5 | 0,6 |
| Eisen | 0,1 | 0,1 | 0,1 |
| Kupfer | 0,1 | 0,1 | 0,1 |
| Chrom | 0,0 | 0,0 | 0,0 |
| Blei | 0,1 | 0,2 | 0,1 |
| Cadmium | 0,0 | 0,0 | 0,0 |

## Beispiel 3

2500 g    Elektrofilterasche
500 g    Hydroxidschlamm
815 g    Wasser
wurden zusammengegeben und 8 Minuten lang intensiv in einem Intensivmischer gemischt.
200 g    Zement
50 g    Wasserglas (35 Gew.-% Natriumsilicat in Wasser)
wurden zugegeben und weitere 50 Minuten lang intensiv in dem Intensivmischer gemischt. Dabei bildete sich ein Granulat, das nach der Reaktionszeit von insgesamt 58 Minuten ohne Nachhärtezeit fest und transportfähig war.

Ein Auslaugetest wurde wie in Beispiel 1 durchgeführt und ergab folgende Werte (Leitfähigkeit in mS bzw. Schwermetallgehalt in ppm) :

| Nach | 0,5 Std. | 5 Std. | 50 Std. |
|---|---|---|---|
| pH | 8,0 | 7,3 | 9,0 |
| Leitfähigkeit | 11,5 | 4,7 | 2,3 |
| Zink | 1,1 | 0,4 | 0,1 |
| Nickel | 0,2 | 0,2 | 0,2 |
| Eisen | 0,1 | 0,0 | 0,0 |
| Kupfer | 0,1 | 0,1 | 0,0 |
| Chrom | 0,0 | 0,0 | 0,0 |
| Blei | 0,3 | 0,4 | 0,1 |
| Cadmium | 0,1 | 0,0 | 0,0 |

Beispiel 4

1500 g    Hydroxidschlamm
750 g    Flugasche
1200 g    Wasser
wurden zusammengegeben und 5 Minuten lang intensiv in einem Intensivmischer gemischt.
1150 g    Portlandzement
100 g    Kalkhydrat (Calciumhydroxid)
wurden zugegeben und weitere 38 Minuten lang intensiv in dem Intensivmischer gemischt. Dabei bildete sich ein Granulat, das nach der Reaktionszeit von insgesamt 43 Minuten ohne Nachhärtezeit fest und transportfähig war.

Ein Auslaugtest wurde wie in Beispiel 1 durchgeführt und ergab folgende Werte (Leitfähigkeit in mS bzw. Schwermetallgehalt in ppm) :

| Nach | 0,5 Std. | 5 Std. | 50 Std. |
|---|---|---|---|
| pH | 8,3 | 8,7 | 8,8 |
| Leitfähigkeit | 4,4 | 3,0 | 1,9 |
| Zink | 0,1 | 0,1 | 0,0 |
| Nickel | 0,3 | 0,4 | 0,3 |
| Eisen | 0,0 | 0,1 | 0,0 |
| Kupfer | 0,1 | 0,1 | 0,1 |
| Chrom | 0,0 | 0,0 | 0,0 |
| Blei | 0,0 | 0,0 | 0,0 |
| Cadmium | 0,0 | 0,0 | 0,1 |

Beispiel 5

2000 g    Flugasche

1000 g     Hydroxidschlamm
175 g      Abfall-Komplexlösung
100 g      Kalk
wurden zusammengegeben und 15 Minuten lang intensiv in einem Intensivmischer gemischt.
20 g      Beschleuniger E 65 A
100 g      Wasserglas (35 Gew.-% Natriumsilicat in Wasser)
500 g      Lafargezement
wurden zugegeben und weitere 30 Minuten lang intensiv in dem Intensivmischer gemischt. Dabei bildete sich ein Granulat, das nach der Reaktionszeit von insgesamt 45 Minuten ohne Nachhärtezeit fest und transportfähig war.

## Patentansprüche

1. Verfahren zur Herstellung eines festen, transportfähigen Granulats, aus dem die Schwermetalle durch saure wässrige Lösungen praktisch nicht ausgelaugt werden, aus schwermetallhaltigen Abfällen, dadurch gekennzeichnet, dass man

a) eine Mischung von mindestens zwei Komponenten herstellt, die mindestens eine Komponente, die aus Flugasche, Rückständen aus der Rauchgasreinigung und Schwermetallhydroxidschlamm gewählt ist, sowie gegebenenfalls eine oder mehr weitere Komponenten, die aus Bindemitteln, Puffersubstanzen, Calciumhydroxid, wässrigen Abfall-Lösungen, die in schwach alkalischem Milieu stabile Schwermetallkomplexe enthalten, und Zement gewählt sind, enthält, und die Mischung in einem Intensivmischer 5 bis 15 Minuten lang mischt und

b) der Mischung danach Zement und gegebenenfalls eine oder mehr weitere Komponenten, die aus Bindemitteln, Puffersubstanzen, Beschleunigern und Calciumhydroxid gewählt sind, zusetzt und nochmals 20 bis 105 Minuten lang in dem Intensivmischer mischt,

wobei nur soviel Wasser vorhanden ist, wie die Mischung zu binden vermag, und wobei die Mischung sich durch die Reaktionswärme und die mechanische Einwirkung erwärmt und zunächst eine plastische Masse entsteht, die dann während des Mischens in das feste, transportfähige Granulat übergeht.

2. Verfahren nach Anspruch 1, dadurch gekennzeichnet, dass man als Zement einen schnellabbindenden Zement, beispielsweise Lafargezement, oder Portlandzement verwendet.

3. Verfahren nach Anspruch 1 oder 2, dadurch gekennzeichnet, dass man als Bindemittel Natronwasserglas oder organische Chelatbildner, vorzugsweise Ethylendiamintetraacetat, Nitrilotriacetat, Citrate und Tartrate, oder anorganische Chelatbildner, vorzugsweise Silicate, Carbonate und Phosphate, und als Puffersubstanzen Calciumhydroxid, Phosphatpuffer oder Silicatpuffer verwendet.

4. Verfahren nach einem der Ansprüche 1 bis 3, dadurch gekennzeichnet, dass das Wasser aus dem Schwermetallhydroxidschlamm sowie gegebenenfalls aus dem Natronwasserglas, aus zugesetztem Wasser bzw. aus zugesetzten wässrigen Abfall-Lösungen, die in schwach alkalischem Milieu stabile Schwermetallkomplexe enthalten, stammt.

5. Verfahren nach einem der Ansprüche 1 bis 3, dadurch gekennzeichnet, dass man die Flugasche, die Rückstände aus der Rauchgasreinigung, den Schwermetallhydroxidschlamm und das Wasser oder die Wässrige Lösung, in beliebiger Reihenfolge miteinander mischt.

6. Verfahren nach einem der Ansprüche 1 bis 5, dadurch gekennzeichnet, dass man den Zement nach dem Bindemittel beimischt.

7. Verfahren nach einem der Ansprüche 1 bis 6, dadurch gekennzeichnet, dass man das Calciumhydroxid vor oder nach dem Bindemittel und Zement beimischt.

8. Verfahren nach einem der Ansprüche 1 bis 7, dadurch gekennzeichnet, dass die Mischzeit in Stufe b) 20 bis 40 Minuten beträgt.

9. Verfahren nach einem der Ansprüche 1 bis 8, dadurch gekennzeichnet, dass man die Mischungskomponenten in folgenden Mengenverhältnissen verwendet:

| | |
|---|---|
| Flugasche und/oder Rückstände aus der Rauchgasreinigung | 0 bis 70 Gew.-% |
| Schwermetallhydroxidschlamm | 0 bis 65 Gew.-% |
| Zement | 1 bis 30 Gew.-% |
| Wasser oder Schwermetallkomplexlösung | 0 bis 30 Gew.-% |
| Bindemittel | 1 bis 10 Gew.-% |
| Puffersubstanz | 0 bis 10 Gew.-% |

wobei der Gesamtwassergehalt 10 bis 50 Gew.-% beträgt.

10. Verfahren nach einem der Ansprüche 1 bis 9, dadurch gekennzeichnet, dass man bis zu 15 Gew.-% zerkleinerte Batterien und/oder zerkleinerte Leuchtstoffröhren und/oder in Kalkmilch aufgelöste bzw. aufgeschlossene Haushalt-Rücknahmen beimischt.

## Claims

1. A process for the production of a solid, transportable granulated material from waste containing heavy metals, from which material there is virtually no leaching of the heavy metals by acidic aqueous solutions, characterised in that
   a) a mixture of at least two components is produced, which contains at least one component selected from fly ash, residues from flue gas purification and heavy-metal hydroxide sludge, and optionally one or more further components selected from binding agents, buffer substances, calcium hydroxide, aqueous solutions of waste containing heavy-metal complexes which are stable in a slightly alkaline environment, and cement, and the mixture is mixed in an intensive mixer for 5 to 15 minutes, and in that
   b) cement and, where appropriate, one or more further components selected from binding agents, buffer substances, accelerators and calcium hydroxide are subsequently added to the mixture and it is mixed for a further 20 to 105 minutes in the intensive mixer,
   wherein only that amount of water which may be bound by the mixture is present, and wherein the mixture is heated by the reaction heat and the mechanical action, and first of all a plastic substance is produced which then changes into the solid, transportable granulated material during mixing.

2. A process according to Claim 1, characterised in that a quick-setting cement, for example Lafarge cement or Portland cement, is used as the cement.

3. A process according to Claim 1 or 2, characterised in that soda water glass or organic chelating agents, preferably ethylenediaminetetra-acetate, nitrilotriacetate, citrates and tartrates, or inorganic chelating agents, preferably silicates, carbonates and phosphates, are used as binding agents, and calcium hydroxide, phosphate buffers or silicate buffers are used as buffer substances.

4. A process according to any one of Claims 1 to 3, characterised in that the water is derived from the heavy-metal hydroxide sludge and, where appropriate, from the soda water glass, from added water or from added aqueous solutions of waste containing heavy-metal complexes which are stable in a slightly alkaline environment.

5. A process according to any one of Claims 1 to 3, characterised in that the fly ash, the residues from flue gas purification, the heavy-metal hydroxide sludge and the water or the aqueous solution are mixed together in any order.

6. A process according to any one of Claims 1 to 5, characterised in that the cement is admixed after the binding agent.

7. A process according to any one of Claims 1 to 6, characterised in that the calcium hydroxide is admixed before or after the binding agent and cement.

8. A process according to any one of Claims 1 to 7, characterised in that the mixing time is 20 to 40 minutes in stage b).

9. A process according to any one of Claims 1 to 8, characterised in that the components of the mixture are used in the following proportions:

```
fly ash and/or residues
from flue gas purification          0 to 70 % by weight

heavy-metal hydroxide sludge        0 to 65 % by weight
cement                              1 to 30 % by weight
water or solution of heavy-
metal complex                       0 to 30 % by weight
binding agent                       1 to 10 % by weight
buffer substance                    0 to 10 % by weight
the total water content being      10 to 50 % by weight
```

10. A process according to any one of Claims 1 to 9, characterised in that up to 15 % by weight of crushed batteries and/or crushed fluorescent tubes and/or household refuse materials taken back which have been dissolved or decomposed in lime milk are admixed.


**Revendications**

1. Procédé de préparation, à partir de déchets contenant des métaux lourds, d'un granulé solide, transportable, duquel les métaux lourds ne peuvent pratiquement pas être lixiviés par les solutions aqueuses acides, caractérisé en ce que
   a) on prépare un mélange d'au moins deux composants dont l'un au moins est choisi parmi les cendres, les résidus de purification des fumées et les boues d'hydroxydes de métaux lourds et qui contient,cas échéant,un ou plusieurs autres composants choisis parmi les liants, les substances tampon, l'hydroxyde de calcium, les solutions aqueuses usées qui con-contiennent des complexes de métaux lourds stables en milieu faiblement alcalin et le ciment, et l'on brasse le mélange dans un mélangeur puissant pendant 5 à 15 minutes et
   b) on ajoute ensuite au mélange du ciment,cas échéant, un ou plusieurs autres composants choisis parmi les liants, les substances tampon, les accélérateurs et l'hydroxyde de calcium et l'on mélange encore une fois pendant 20 à 105 minutes dans le mélangeur puissant,
   cependant que l'eau n'est présente qu'en une quantité propre à être liée par le mélange et que le mélange s'échauffe par la chaleur réactionnelle et par l'effet méchanique et qu'il se forme d'abord une masse plastique qui se transforme ensuite pendant le mélange en le granulé solide, transportable.

2. Procédé selon la revendication 1, caractérisé en ce qu'on utilise comme ciment un ciment à prise rapide, par exemple du ciment Lafarge ou du ciment Portland.

3. Procédé selon la revendication 1 ou 2, caractérisé en ce qu'on utilise comme liant du verre liquide à la soude ou une substance organique génératrice de chélate, de préférence, l'éthylène-diamine-tétraacétate, le nitrilotriacétate, un citrate ou un tartrate, ou une substance minérale génératrice de chélate, de préférence, un silicate, un carbonate ou un phosphate, et comme substances tampon l'hydroxyde de calcium, un tampon au phosphate ou un tampon au silicate.

4. Procédé selon l'une des revendications 1 à 3, caractérisé en ce que l'eau provient des boues d'hydroxydes de métaux alcalins ainsi que, cas échéant, du verre liquide à la soude, d'une adjonction d'eau ou d'une adjonction de solutions aqueuses usées qui contiennent des complexes de métaux alcalins stables en milieu faiblement alcalin.

5. Procédé selon l'une des revendications 1 à 3, caractérisé en ce que l'on mélange les uns avec les autres, dans un ordre de succession quelconque, les cendres, les résidus de purification des fumées, les boues d'hydroxydes de métaux alcalins et l'eau ou la solution aqueuse.

6. Procédé selon l'une des revendications 1 à 5, caractérisé en ce qu'on ajoute le ciment après le liant.

7. Procédé selon l'une des revendications 1 à 6, caractérisé en ce qu'on ajoute l'hydroxyde de calcium avant ou après le liant et le ciment.

8. Procédé selon l'une des revendications 1 à 7, caractérisé en ce que la durée de mélange à l'étape b) est de 20 à 40 minutes.

9. Procédé selon l'une des revendications 1 à 8, caractérisé en ce qu'on utilise les composants du mélange en les proportions suivantes:

| | |
|---|---|
| Cendres et/ou résidus de purification des fumées | 0 à 70% en poids |
| Boues d'hydroxydes de métaux alcalins | 0 à 65% en poids |
| Ciment | 1 à 30% en poids |
| Eau ou solution de complexes de métaux lourds | 0 à 30% en poids |
| Liants | 1 à 10% en poids |
| Substance tampon | 0 à 10% en poids |

la teneur totale en eau étant de 10 à 50% en poids.

10. Procédé selon l'une des revendications 1 à 9, caractérisé en ce qu'on ajoute jusqu'à 15% en poids de piles concassées et/ou de tubes luminescents concassés et/ou de déchets ménagers dissous ou désagrégés dans du lait de chaux.